# EUROPEAN PATENT APPLICATION

(11) **EP 2 819 209 A2**
(43) Date of publication of application: **31.12.2014**
(21) Application number: 13182841.0
(22) Date of filing: 03.09.2013
(51) Int. Cl.: H01M 2/10

(54) **Battery casing and battery assembly**

(30) Priority: 28.06.2013 TW 102123311
(71) Applicant: Lite-On Technology Corporation, Taipei City 11492 (TW)
(72) Inventor: Lu, Cheng-Ji, 11494 Taipei City (TW); Chen, Chiung-Han, 11494 Taipei City (TW)
(74) Representative: Altenburg, Bernardus Stephanus Franciscus

(57) **Abstract**

A battery casing (1) and a battery assembly (100) are disclosed. The battery casing has (1) a casing body (20), a least one first stress-bearing element (30), and at least one second stress-bearing element (40). The casing body (20) has two corresponding disposed first walls (21) and a bearing surface (22). The at least one first stress-bearing element (30) is disposed on the bearing surface (22). The two ends of the at least one second stress-bearing element (40) connect with the two first walls (21) and are situated above and aligned with the at least one first stress-bearing element (30) to form at least one stress-bearing space (S1) for accommodating at least one battery (10).

## Description

### BACKGROUND OF THE INVENTION

### 1. Field of the Invention

The present invention relates to a battery assembly and a battery casing, and particularly to a battery assembly and a battery casing with a stress-bearing element for individually dispersing the stress of a single battery.

### 2. Description of the Related Art

In general, a battery assembly may refer to a body with at least one cell accommodated therein as a battery pack, or with at least one battery packs accommodated therein as a battery module. Hereafter, the battery assembly will indicate both situations. In order to ensure the operation stability of the battery assembly, each battery cell or pack is separated from the others by thermal insulation plates or buffering pads individually when assembling the battery so as to prevent one battery from touching another. In addition, by employing the thermal insulation plates or buffering pads, the heat yielded from the battery during operation can be dissipated.

US patent No. 7,862,924 and US patent No. 8,039,141 disclose a common assembly method of the battery assembly. The assembly procedure is presented as follows: placing thermal insulation plates or buffering pads between each battery and then employing screw rods and two fixing boards for clamping battery in-between. As a result, each battery touches the adjacent thermal insulation plate or the adjacent buffering pad to prevent the battery from deformation and to dissipate the heat yielded from the battery. For a single battery cell or pack assembly, there is no stress-bearing concern. However, when the battery assembly is consisting of several battery cells or packs stacking together, issues of stress-bearing and the orientation of the aforementioned battery assembly has not been considered. Thus the aforementioned battery assembly can operate properly only under horizontal placement. If the battery assembly is placed vertically, the battery at the bottom bears all the weight and stress of the elements situated above to such a degree that the battery at the bottom is damaged or even lead to a malfunction of the whole battery assembly. In addition, if the battery assembly is in an unsteady environment, such as a vehicle travelling on a bumpy road, the battery assembly cannot operate properly because of the unsteadiness of the battery caused by the vehicle in bumpy motion.

To sum up, the battery assembly of the prior art is designed without consideration of the stress-bearing issue or the orientation of the battery assembly, so massive stress is applied on a single battery. Also, the battery cell assembly of the prior art is designed without considering the safety issue of a battery assembly operating in an unsteady environment or impacted by external forces from the operating environment (for instance, vehicle's vibrations), which affects the battery assembly in terms of safety. As a result, there is a need to provide a new battery assembly and a battery casing to overcome the problems of the prior art.

### SUMMARY OF THE INVENTION

An object of the present invention is to provide a battery casing with a stress-bearing element for individually dispersing the stress of a single battery.

Another object of the present invention is to provide a battery assembly with a stress-bearing element for individually dispersing the stress of a single battery.

In order to achieve the above objects, the battery casing of the present invention comprises a casing body, at least one first stress-bearing element, and at least one second stress-bearing element. The casing body comprises two oppositely disposed first side walls and a bearing surface. The at least one first stress-bearing element is disposed on the bearing surface. The two ends of the at least one second stress-bearing element connect to the two first side walls, respectively, and the at least one second stress-bearing element is situated above and is substantially aligned with the at least one first stress-bearing element; therefore, at least one stress-bearing space is formed between the at least one first stress-bearing element, the at least one second stress-bearing element, and the casing body, so as to accommodate at least one battery.

According to one embodiment of the present invention, the casing body further comprises two oppositely disposed second side walls, and the two ends of the two second side walls connect with the two first side walls, respectively. A plane that is formed between the at least one second stress-bearing element and the at least one first stress-bearing element is substantially parallel to the second side wall such that a stress-bearing space is formed between the plane and the second side wall.

Each of the two first side walls of the aforementioned battery casing comprises an insertion groove for engaging with the second stress-bearing element.

The insertion groove comprises a notch whose location corresponds to the second stress-bearing element for allowing the two ends of the second stress-bearing element to enter the insertion groove via the notch. The second stress-bearing element comprises a main body, and each of the two ends of the main body comprises a bended section and an engagement portion; the bended section touches against the notch, and a portion of the engagement portion is inserted into the insertion groove after the two ends of the main body enter the insertion groove via the notch.

The at least one first stress-bearing element is a plurality of first stress-bearing elements, and the at least one second stress-bearing element is a plurality of second stress-bearing elements, and the at least one battery unit is a plurality of battery units. Each of the second stress-bearing elements is situated above and is aligned with each of the first stress-bearing elements correspondingly such that a plurality of stress-bearing spaces are formed among each of the first stress-bearing elements, each of the second stress-bearing elements, and the casing body for accommodating each of the battery individually.

The casing body further comprises two oppositely disposed second side walls, and the two ends of the two second side walls connect with the two first side walls, respectively. A plane that is formed between the at least one first stress-bearing element and the corresponding second stress-bearing element, in which each stress-bearing space is formed between any two adjacent planes or between the plane and the adjacent second side wall. Each of the two first side walls comprises a recessing section for engaging with the second stress-bearing element.

According to one embodiment of the present invention, a depth of the recess of the recession section is equal to a width of the insertion groove.

The present invention further provides a battery assembly comprising a casing body, at least one first stress-bearing element, at least one second stress-bearing element, and at least one battery. The casing body comprises two oppositely disposed first side walls and a bearing surface, the at least one first stress-bearing element is disposed on the bearing surface. The two ends of the at least one second stress-bearing element connect to the two first side walls respectively, and the at least one second stress-bearing element is situated above and is substantially aligned with the at least one first stress-bearing element such that at least one stress-bearing space for accommodating at least one battery is formed among the at least one first stress-bearing element, the at least one second stress-bearing element, and the casing body.

The casing body further comprises two oppositely disposed second side walls, wherein the two ends of the two second side walls connect to the two first side walls, respectively; a plane that is formed between the at least one second stress-bearing element and the at least one first stress-bearing element is substantially parallel to the second side wall, and a stress-bearing space is formed between the plane and the second side wall.

Each of the two first side walls comprises an insertion groove for engaging with the second stress-bearing element.

A notch is disposed in the insertion groove, and the location of the notch corresponds to the second stress-bearing element for allowing two ends of the second stress-bearing element to enter the insertion groove via the notch. The second stress-bearing element comprises a main body, and each of the two ends of the main body comprises a bended section and an engagement section. The bended section presses against the notch and a portion of the engagement section inserts into the insertion groove after the two ends of the main body enter the insertion groove via the notch.

The at least one battery cell further comprises a battery main body, an upper cover, and a bottom cover. The battery main body comprises an electrode connecting surface and a bottom surface opposite to the electrode connecting surface, wherein the upper cover connects with the electrode connecting surface and the bottom cover connects with the bottom surface.

When the at least one battery is accommodated in the at least one stress-bearing space, the at least one first stress-bearing element touches one end of the bottom cover and the at least one second stress-bearing element touches one end of the upper cover.

The at least one second stress-bearing element further comprises an extension section situated above the main body, and the upper cover comprises a top surface. When the at least one battery is accommodated in the at least one stress-bearing space, the extension section touches the top surface.

The at least one battery cell further comprise a first buffering pad and a second buffering pad, wherein the first buffering pad touches the upper cover and the electrode connecting surface respectively, and the second buffering pad touches the bottom cover and the bottom surface, respectively. The at least one first stress-bearing element is a plurality of first stress-bearing elements, the at least one second stress-bearing element is a plurality of second stress-bearing elements, and the at least one battery cell is a plurality of battery cells. Each of the second stress-bearing elements is situated above and is aligned with each of the at least one first stress-bearing elements correspondingly, such that a plurality of stress-bearing spaces is formed among each of the first stress-bearing elements, each of the second stress-bearing elements, and the casing body for accommodating the plurality of battery correspondingly.

The casing body comprises two oppositely disposed second side walls, and the two ends of the two second side walls connect with the two first side walls, respectively. A plane that is formed between each of the first stress-bearing elements and each of the second stress-bearing elements correspondingly is parallel to the second side wall, wherein each the stress-bearing spaces is formed between any two adjacent planes or between the plane and the adjacent second side walls.

Each of the plurality of battery assemblies comprises at least one battery main body. When each of the battery is accommodated in each of the stress-bearing spaces individually, any two of the adjacent battery bodies are separated by a gap.

Each of the two first side walls comprises a recessing section for engaging the battery body.

Thus, because the design provides a plurality of separate stress-bearing spaces for each battery cell, the stress of each battery cell can be transferred to the casing body to prevent the battery from being applied with excessive force on a single battery.

### BRIEF DESCRIPTION OF THE DRAWINGS

The exemplary embodiment of the present invention will be understood more fully from the detailed description given below and from the accompanying drawings of the invention, which, however, should not be taken into limiting the invention to the specific embodiment but are for explanation and understanding only.
FIG. 1a is a schematic drawing of one embodiment of the battery casing of the present invention.
FIG. 1b is a schematic drawing of one embodiment of the second stress-bearing element.
FIG. 2 illustrates a top view of one embodiment of the battery casing of the present invention.
FIG. 3 illustrates an exploded view of one embodiment of a battery cell.
FIG. 4 illustrates the assembly of one embodiment of the battery of the present invention.
FIG. 5 is a schematic drawing of one embodiment of the battery assembly of the present invention.
FIG. 6 illustrates one section view of one embodiment of the battery assembly of the present invention.
FIG. 7 illustrates another section view of one embodiment of the battery cell assembly of the present invention.

### DETAILED DESCRIPTION OF THE PREFERRED EMBODIMENT

To facilitate understanding and to clarify the object, characteristics and advantages of the present invention, the following specific embodiments and figures illustrating the present invention are presented to provide a detailed description.

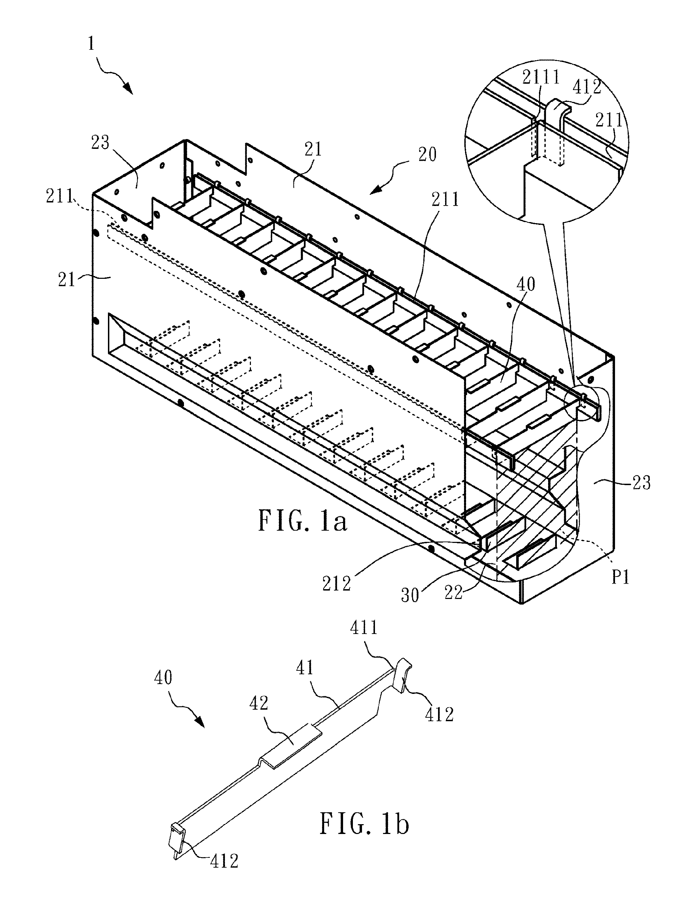

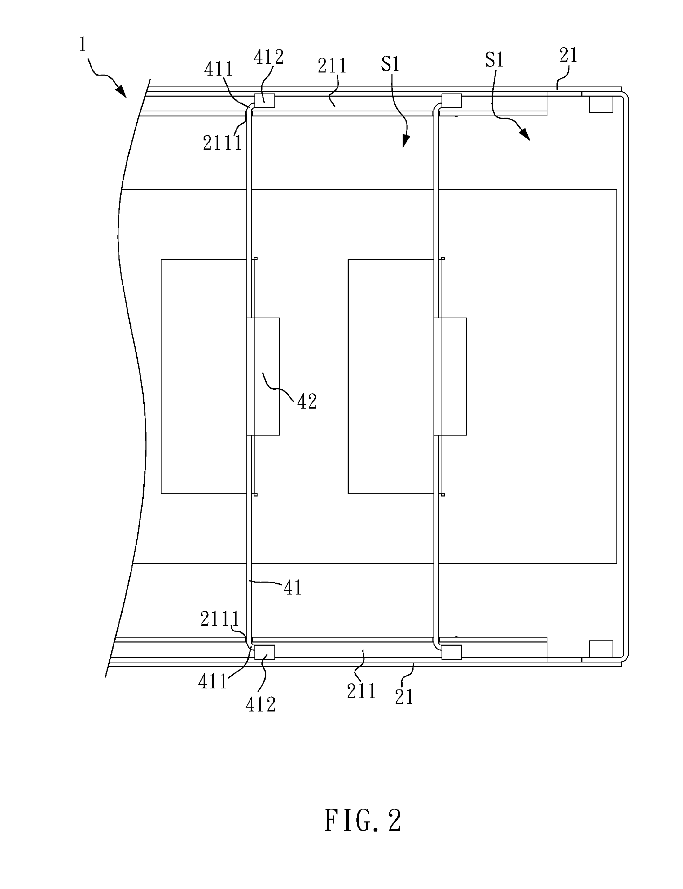

Please refer to FIG. 1a, FIG. 1b and FIG. 2 to understand the details of the structure of one embodiment of the battery casing of the present invention, wherein FIG. 1a is a schematic drawing of one embodiment of the battery casing of the present invention; FIG. 1b is a schematic drawing of one embodiment of the second stress-bearing element; FIG. 2 illustrates a top view of one embodiment of the battery casing of the present invention.

The battery casing 1 of the present invention is employed for accommodating at least one or a plurality of batteries. According to one embodiment of the present invention, as shown in FIG. 1a, the battery casing 1 of the present invention comprises a casing body 20, a plurality of first stress-bearing elements 30, and a plurality of second stress-bearing elements 40. Each of the plurality of second stress-bearing elements 40 is situated above and is aligned with each of the first stress-bearing elements 30 individually; therefore, a plurality of stress-bearing spaces for accommodating at least one or a plurality of batteries are formed among the plurality of first stress-bearing elements 30, the plurality of second stress-bearing elements 40 and the casing body 20.

As shown in FIG. 1a, the casing body 20 comprises two oppositely disposed first side walls 21, a bearing surface 22, and two oppositely disposed second side walls 23, wherein the two ends of the two first side walls 21 connect with the two second side walls 23 respectively and the four sides of the bearing surface 22 connect with the two first side walls 21 and the two second side walls 23, respectively. In this embodiment, as shown in FIG. 1a, each of the two first side walls 21 comprises an insertion groove 211 and a recessing section 212, wherein the insertion grooves 211 are disposed corresponding to the second stress-bearing elements 40 for facilitating the engagement with the second stress-bearing elements 40. Furthermore, the insertion groove 211 comprises a notch 2111, whose location corresponds to the second stress-bearing element 40 for allowing the two ends of the second stress-bearing element 40 to enter the insertion groove 211 via the notch 2111.

As shown in FIG. 1a, each of the first stress-bearing elements 30 is disposed on the bearing surface 22, and the assembly position of each of the plurality of batteries inside the casing body 20 can be defined and located by the first stress-bearing element 30 in advance. Therefore, one difficulty caused by manufacturing tolerances during assembly, i.e., that the plurality of batteries cannot be placed in the casing body 20 properly, can be avoided.

Furthermore, as shown in FIG. 1a, the location of each of the first stress-bearing elements 30 is aligned with the location of the notch 2111 of each second stress-bearing element 40 individually. Thus, after the two ends of each second stress-bearing element 40 enter the insertion groove 211 via the notch 2111, each of the first stress-bearing elements 30 and each of the second stress-bearing elements 40 form a plane P1 correspondingly, and stress-bearing spaces for accommodating batteries are formed between any two adjacent planes P1 or between a plane P1 and an adjacent second side wall 23. It is noted that, in this embodiment, each of the first stress-bearing elements 30 is substantially parallel to the bearing surface 22; the planes P1 are substantially parallel to each other; and the plane P1 is substantially parallel to the second side wall 23; however, the present invention is not limited to the aforementioned.

As shown in FIG. 1b, the second stress-bearing element 40 comprises a main body 41 and an extension section 42, wherein the main body 41 in this embodiment is rectangular and the extension section 42 perpendicularly connects to the long axis side of the main body 41. The two ends of the short axis side of the main body 41 both comprise a bended section 411 and an engagement portion 412, wherein as shown in FIG. 2 and the partly enlarged drawing in FIG. 1a, after the two ends of the main body 41 enter the insertion groove 211 via the notch 2111, the bended section 411 touches against the notch 2111 and a portion of the engagement portion 412 inserts into the insertion groove 211. Therefore, each of the battery is individually accommodated in each of the stress-bearing spaces S1 formed among each of the first stress-bearing elements 30, each of the second stress-bearing elements 40 and the casing body 20.

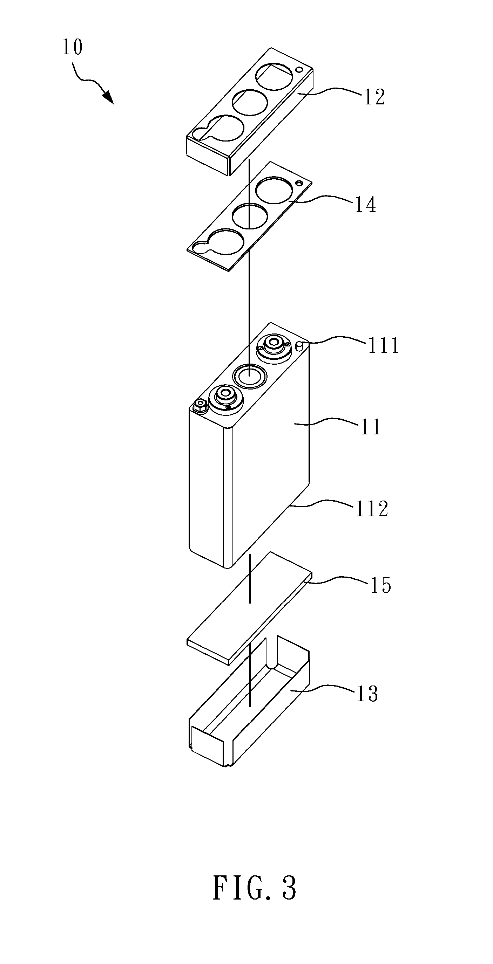

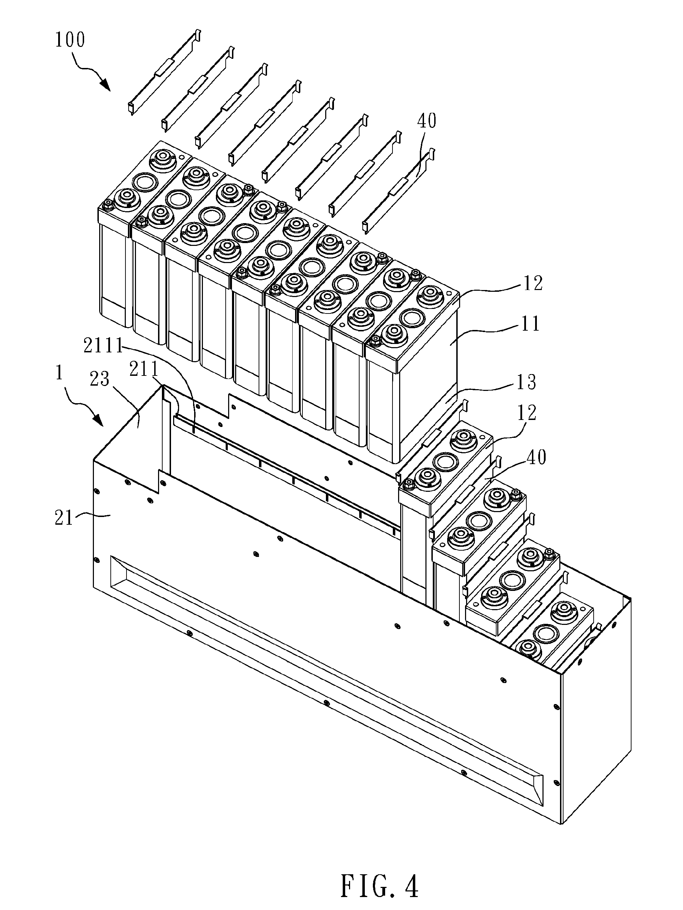

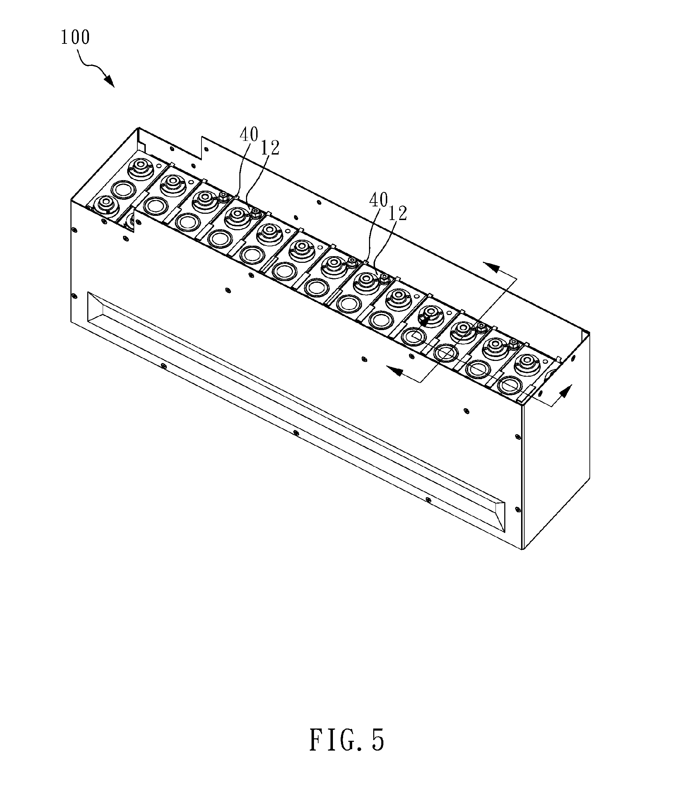

Please refer to FIG. 1a and FIG. 3∼FIG. 5 so as to understand the details of the structure of one embodiment of the battery assembly, wherein FIG. 3 illustrates an exploded view of one embodiment of the battery; FIG. 4 illustrates the assembly of one embodiment of the battery of the present invention; FIG. 5 is a schematic drawing of one embodiment of the battery cell assembly of the present invention.

As shown in FIG. 3, the battery 10 in this embodiment comprises a battery body 11, an upper cover 12, a bottom cover 13, a first buffering pad 14, and a second buffering pad 15. The battery body 11 in this embodiment is a prismatic cell and comprises an electrode connecting surface 111 and a bottom surface 112 opposite to the electrode connecting surface111. The electrode connecting surface 111 has a plurality of electrode heads. As shown in FIG. 3, the upper cover 12 connects with the electrode connecting surface 111 and the bottom cover 13 connects with the bottom surface 112 such that the structural strength of the battery body 11 is enhanced due to the placement of the upper cover 12 and the bottom cover 13. Furthermore, the upper cover 12 and the bottom cover 13 in this embodiment are both made of metal; however, the present invention is not limited to this material, and the upper cover 12 and the bottom cover 13 can also be made of plastic.

The first buffering pad 14 is located between the upper cover 12 and the electrode connecting surface 111, and the second buffering pad 15 is located between the bottom cover 13 and the bottom surface 112 to provide vibration-proofing and buffering effects for the battery body 11. Both the first buffering pad 14 and the second buffering pad 15 are made of rubber. However, if the battery 10 operates in an environment requiring enhanced heat dissipation, both the first buffering pad 14 and the second buffering pad 15 can be replaced by thermal pads to enhance the heat dissipating efficiency of the battery 10 to maintain the stability of the battery 10.

As shown in FIG. 4, the battery assembly 100 of the present invention comprises a battery casing 1 and a plurality of batteries 10. As shown in FIG. 1a and FIG. 4, during assembly of the battery 10 with the battery casing 1 of the present invention, each of the plurality of batteries 10 is placed into the casing body 20 in turns, and then each of the plurality of second stress-bearing elements 40 is inserted into each notch 2111 of the insertion groove 211 individually. Thus each battery 10 is accommodated in each of the stress-bearing spaces formed among each of the first stress-bearing elements 30, each of the second stress-bearing elements 40, and the casing body 20, as shown in FIG. 5. According to one embodiment of the present invention, once assembled, the battery cell assembly 100 can be applied to industrial machinery or vehicles.

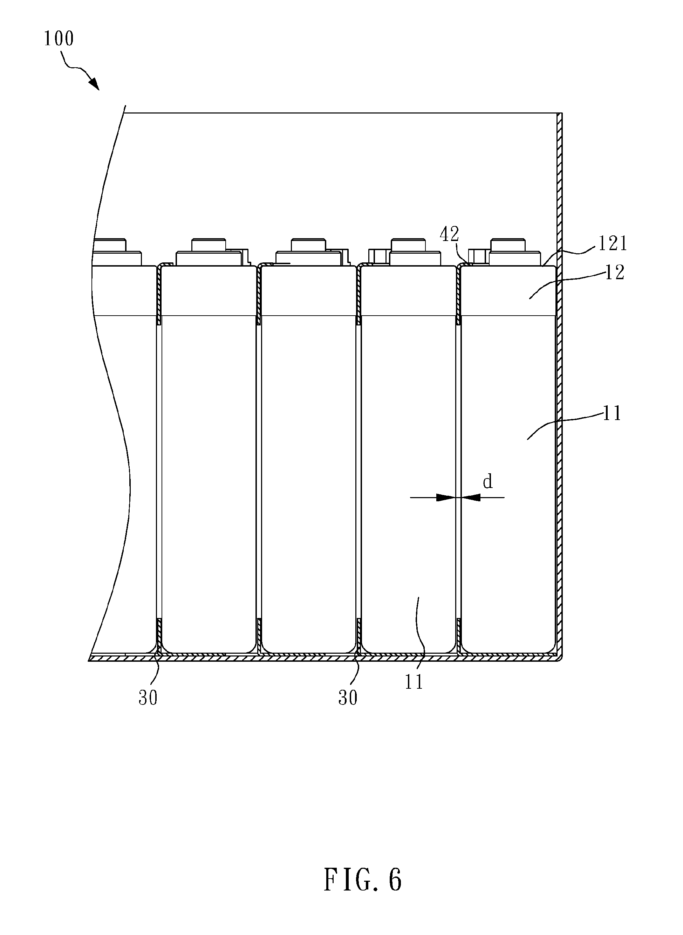

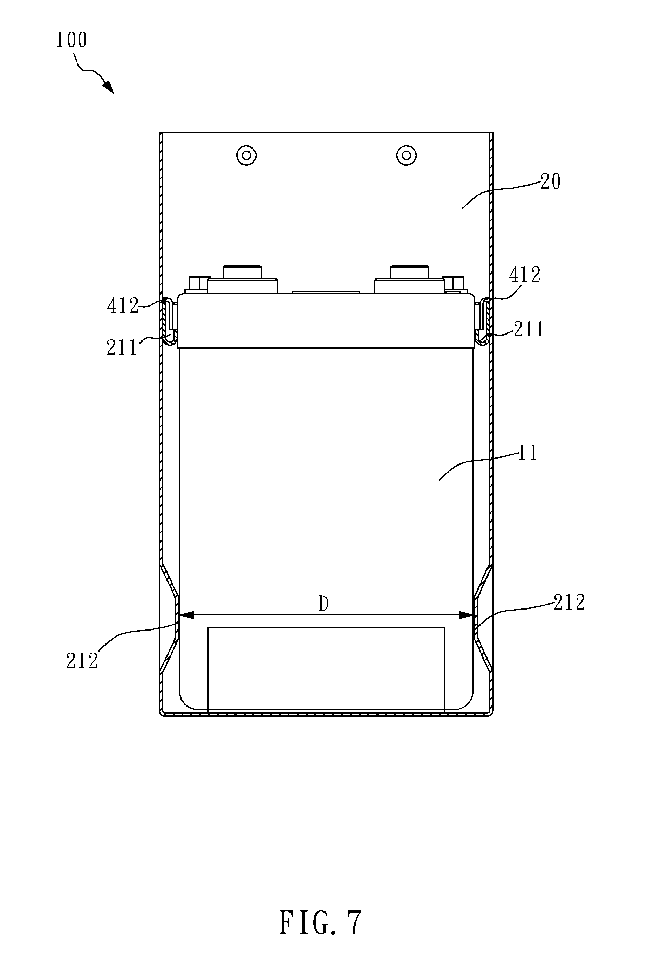

Please refer to FIG. 2, FIG. 6, and FIG. 7 to understand the details of the structure of one embodiment of the battery assembly of the present invention, wherein FIG. 6 illustrates one section view of one embodiment of the battery assembly of the present invention; FIG. 7 illustrates another section view of one embodiment of the battery assembly of the present invention.

As shown in FIG. 6, when the battery cell 10 is placed in the stress-bearing space of the casing body 20, the first stress-bearing element 30 touches the lateral face of the battery body 11, which is close to the bottom surface 112. The second stress-bearing element 40 touches the lateral face of the battery body 11, which is close to the electrode connecting surface 111, and the extension section 42 touches the top surface 121 of the upper cover 12. While the battery body 11 is operating, the electrode connecting surface 111 and the electrode heads are the two locations having the highest temperature in the battery body 11. Meanwhile, a direction toward the electrode heads is the direction with the best heat dissipating efficiency. Therefore, the heat from the electrode connecting surface 111 can be guided to the lateral face of the battery body 11 by employing the extension section 42 to touch the top surface 121 and thus increase the heat dissipation efficiency.

Each battery 10 of the battery assembly 100 of the present invention is pressed by each corresponding first stress-bearing element 30 and each corresponding second stress-bearing element 40. Thus the first buffering pad 14 and the second buffering pad 15 inside each battery 10 are under a stressed-tight state to ensure that the electrode heads of the battery 10 receives no vibration even when the battery assembly 100 of the present invention is operated in an unsteady environment, such as a moving vehicle. As a result, the stability and safety of each battery 10 are ensured.

Furthermore, as shown in FIG. 2 and FIG. 6, because of the design of the bended section 411 and the engagement portion 412 in the second stress-bearing element 40, the second stress-bearing element 40 is tightly engaged with the casing body 20. When each of the battery 10 receives force, the stress of the battery 10 is transferred immediately to the casing body 20 by the second stress-bearing element 40 and the first stress-bearing element 30 such that battery deterioration caused by excessive force applied on single battery 10 is avoided.

Regarding the orientation of the battery assembly 100 of the present invention, the battery assembly 100 of the present invention can be placed upright. When the battery assembly 100 is placed upright, each of the second stress-bearing elements 40 and the first stress-bearing elements 30 bears the weight of each battery 10 individually, and then the weight of each battery cell 10 is transferred to the casing body 20 for preventing the battery 10 at the bottom from deterioration or explosion caused by excessive stress being applied thereon; thus, problems in the prior art are solved accordingly.

Furthermore, when each battery 10 is accommodated in each of the stress-bearing spaces individually, as shown in FIG. 7, any two adjacent battery bodies 11 are separated by a gap d for preventing the battery body 11 from touching the adjacent battery body 11 because of battery expansion while the battery bodies 11 are operating. In addition, heat can be dissipated between the battery bodies 11 through the gap d, and the minimum width of the gap d is 0.8mm.

As shown in FIG. 7, when the battery 10 is accommodated in the casing body 20, the recessing section 212 of the two first side walls 21 presses against the battery body 11 from the two sides of the battery body 11. Therefore, when the battery cell assembly 100 of the present invention is employed as a vehicle battery, the recessing section 212 presses the battery body 11 and prevents the battery body 11 from vibrating so that the stability of the battery cell assembly 100 of the present invention is enhanced accordingly. Furthermore, as shown in FIG. 7, the engagement portion 412 of the second stress-bearing element 40 touches the insertion groove 211, and the width of the insertion groove 211 is substantially equal to the depth of the recessing section 212 for allowing the two first side walls 21 to press against the battery 10 to prevent the battery cell 10 from vibrating due to external forces.

In summary, regardless of the purposes, means and effectiveness, this invention has characteristics that are quite different from those of known technology. It is noted that many of the aforementioned embodiments are only for illustrative purposes and that the claims of this invention should depend on the claims rather than being limited to the embodiments. Any professional who is skilled in the art can modify and change the embodiments in the case without violating the technical principles and spirit of the present invention. The protected rights will be as described later in the claims.

## Claims

1. A battery casing (1) for accommodating at least one battery (10), comprising:
a casing body (20), comprising two oppositely disposed first side walls (21) and a bearing surface (22);
at least one first stress-bearing element (30) disposed on the bearing surface (22); and
at least one second stress-bearing element (40), two ends of which connect to the two first side walls (21) respectively and are situated above and substantially aligned with the at least one first stress-bearing element (30) such that at least one stress-bearing space (S1) for accommodating at least one battery (10) is formed among the at least one first stress-bearing element (30), the at least one second stress-bearing element (40), and the casing body (20).

2. The battery casing (1) as claimed in claim 1, wherein the casing body (20) further comprises two oppositely disposed second side walls (23), the two ends of the two second side walls (23) connecting with the two first side walls (21) respectively; a plane (P1) that is formed between the at least one second stress-bearing element (40) and the at least one first stress-bearing element (30) is parallel to the second side wall (23) such that a stress-bearing space (S1) is formed between the plane (P1) and the second side wall (23).

3. The battery casing (1) as claimed in claim 1 or 2, wherein each of the two first side walls (21) comprises an insertion groove (211) for engaging with the second stress-bearing element (40).

4. The battery casing (1) as claimed in claim 3, wherein the insertion groove (211) comprises a notch (2111), whose location corresponds to the second stress-bearing element (40) for allowing the two ends of the second stress-bearing element (40) to enter the insertion groove (211) via the notch (2111); the second stress-bearing element (40) comprises a main body (41), and the two ends of the main body (41) both comprise a bended section (411) and an engagement portion (412); the bended section (411) touches against the notch (2111), and a portion of the engagement portion (412) inserts into the insertion groove (211) after the two ends of the main body (41) enter the insertion groove (211) via the notch (2111).

5. The battery casing (1) as claimed in claim 1, wherein the at least one first stress-bearing element (30) is a plurality of first stress-bearing elements (30), the at least one second stress-bearing element (40) is a plurality of second stress-bearing elements (40), and the at least one battery (10) is a plurality of batteries (10), wherein each of the second stress-bearing elements (40) is situated above and is aligned with each of the first stress-bearing elements (30) correspondingly such that a plurality of stress-bearing spaces (S1) for accommodating each of the batteries (10) individually are formed among each of the first stress-bearing elements (30), each of the second stress-bearing elements (40), and the casing body (20); the casing body (20) comprises two oppositely disposed second side walls (23), and the two ends of the two second side walls (23) connect with the two first side walls (21), respectively; a plane (P1) is formed between each of the second stress-bearing elements (40) and each of the first stress-bearing elements (30), and each of the stress-bearing spaces (S1) is formed between any two adjacent planes (P1) or between the plane (P1) and an adjacent second side wall (23).

6. The battery casing (1) as claimed in claim 3, wherein each of the two first side walls (21) has a recessing section (212) for pressing the battery body (11) from the two lateral sides of the battery body (11) and a depth of the recessing section (212) is equal to a width of the insertion groove (211).

7. A battery assembly (100) comprising:
a casing body (20) comprising two oppositely disposed first side walls (21) and a bearing surface (22);
at least one first stress-bearing element (30) disposed on the bearing surface (22);
at least one second stress-bearing element (40), wherein the two ends of the at least one second stress-bearing element (40) connect to the two first side walls (21), respectively; the at least one second stress-bearing element (40) is situated above and is substantially aligned with the at least one first stress-bearing element (30) such that at least one stress-bearing space (S1) is formed among the at least one first stress-bearing element (30), the at least one second stress-bearing element (40), and the casing body (20); and
at least one battery (10) accommodated in the stress-bearing space (S1).

8. The battery assembly (100) as claimed in claim 7, the casing body (20) further comprising two oppositely disposed second side walls (23), wherein the two ends of the two second side walls (23) connect to the first side wall (21) respectively and a plane (P1) that is formed between the at least one second stress-bearing element (40) and the at least one first stress-bearing element (30) is substantially parallel to the second side wall (23), and a stress-bearing space (S1) is formed between the plane (P 1) and the second side wall (23).

9. The battery assembly (100) as claimed in claim 7, wherein each of the two first side walls (21) comprises an insertion groove (211) for engaging with the second stress-bearing element (40).

10. The battery cell assembly (100) as claimed in claim 9, wherein a notch (2111) is disposed in the insertion groove (211), whose location corresponds to the second stress-bearing element (40), for allowing two ends of the second stress-bearing element (40) to enter the insertion groove (211) via the notch (2111); the second stress-bearing element (40) comprises a main body (41), and each of the two ends of the main body (41) comprises a bended section (411) and an engagement portion (412), wherein the bended section (411) presses against the notch (2111) and a portion of the engagement portion (412) inserts into the insertion groove (211) after the two ends of the main body (41) enter the insertion groove (211) via the notch (2111).

11. The battery assembly (100) as claimed in claim 7 or claim 9, wherein the at least one battery (10) further comprises a battery body (11), an upper cover (12), and a bottom cover (13), and the battery body (10) comprises an electrode connecting surface (111) and a bottom surface (112) opposite to the electrode connecting surface (111), wherein the upper cover (12) connects with the electrode connecting surface (111) and the bottom cover (13) connects with the bottom surface (112).

12. The battery assembly (100) as claimed in claim 11, wherein the at least one first stress-bearing element (30) touches one end of the bottom cover (13) and the at least one second stress-bearing element (40) touches one end of the upper cover (12) when the at least one battery (10) is accommodated in the at least one stress-bearing space (S1).

13. The battery assembly (100)as claimed in claim 11, wherein the at least one second stress-bearing element (40) further comprises an extension section (42) situated above the main body (41) and the upper cover (12) comprises a top surface (121); the extension section (42) touches the top surface (121) when the at least one battery (10) is accommodated in the at least one stress-bearing space (S1); the at least one battery (10) further comprises a first buffering pad (14) and a second buffering pad (15); the first buffering pad (14) touches the upper cover (12) and the electrode connecting surface (111) respectively, and the second buffering pad (15) touches the bottom cover (13) and the bottom surface (112), respectively.

14. The battery assembly (100) as claimed in claim 7, wherein the at least one first stress-bearing element (30) is a plurality of first stress-bearing elements (30), the at least one second stress-bearing element (40) is a plurality of second stress-bearing elements (40), and the at least one battery (10) is a plurality of batteries (10), wherein each of the second stress-bearing elements (40) is situated above and is aligned with each of the at least one first stress-bearing elements (30) correspondingly, such that a plurality of stress-bearing spaces (S1) for accommodating the plurality of batteries (10) individually are formed among each of the first stress-bearing elements (30), each of the second stress-bearing elements (40) and the casing body (20); the casing body (20) comprises two oppositely disposed second side walls (23), and the two ends of the two second side walls (23) connect with the two first side walls (21) respectively; a plane (P1) that is formed between each of the first stress-bearing elements (30) and each of the second stress-bearing elements (40) correspondingly is substantially parallel to the second side wall (23), wherein each the stress-bearing spaces (S1) is formed between any two adjacent planes (P1) or between the plane (P1) and the adjacent second side walls (23).

15. The battery cell assembly (100) as claimed in claim 14, wherein each of the plurality of batteries (10) comprises a battery body (11); when each of the battery (10) is accommodated in each of the stress-bearing spaces (S1) correspondingly, any two of the adjacent battery bodies (11) are separated by a gap and each of the two first side walls (21) comprises a recessing section (212) for pressing the battery body (11).
